# EUROPEAN PATENT SPECIFICATION

(11) **EP 1 570 014 B1**
(45) Date of publication and mention of the grant of the patent: **13.03.2013**
(21) Application number: 03776867.8
(22) Date of filing: 21.10.2003
(51) Int. Cl.: C09D 183/16, C08K 5/00, C08K 3/00, C04B 41/49

(54) **POLYSILAZANE-CONTAINING COATING SOLUTION**
POLYSILAZAN-ENTHALTENDE BESCHICHTUNGSLÖSUNG
SOLUTION DE REVETEMENT CONTENANT DU POLYSILAZANE

(30) Priority: 01.11.2002 JP 2002320482; 04.04.2003 EP 03007726
(43) Date of publication of application: 07.09.2005
(73) Proprietor: AZ Electronic Materials USA Corp., Somerville, New Jersey 08876 (US)
(72) Inventor: SUZUKI, Tadashi, Yokohama City, Kanagawa Pref. 227-0036 (JP); FUNAYAMA, Osamu, Tokyo 156-0056 (JP); DIERDORF, Andreas, 65719 Hofheim (DE); LIEBE, Hubert, 65207 Wiesbaden (DE)
(74) Representative: Rippel, Hans Christoph
(86) International application number: PCT/EP2003/011614
(87) International publication number: WO 2004/039904

(56) References cited:
- EP-A- 0 899 091
- EP-A- 1 170 336
- EP-A1- 0 781 815
- EP-B- 0 825 231
- US-A- 4 722 988
- US-A- 6 083 860
- US-B1- 6 426 127
- PATENT ABSTRACTS OF JAPAN vol. 1998, no. 04, 31 March 1998 (1998-03-31) & JP 09 316340 A (TONEN CORP), 9 December 1997 (1997-12-09)

## Description

### Technical Field

The present invention relates to a coating solution capable of forming a coating excellent in characteristics such as corrosion resistance, anti-scratch properties, abrasion resistance, wetting properties to water, easy-to-clean properties, sealing properties, chemical resistance, oxidation resistance, physical barrier effect, heat resistance, fire resistance, antistatic properties and anti-fouling properties by applying it onto the surface of base materials such as metals, plastics, wood, ceramics, cement, mortar, bricks, clay, etc. of the bodies and wheels of automobiles, trains, airplanes, etc., dentures, tombstones, the interior and exterior of a house, products used with water in toilets, kitchens, washrooms, bathtubs, etc., signboards, signs, plastic products, and glass products.

### Background Art

Conventionally, various measures are taken to prevent pollution of the surfaces of articles. For example, automobile bodies are easily fouled with dust, combustion products such as exhaust gas, or the like. Therefore the bodies are coated with wax to form a wax coating thus preventing pollution of the bodies. By rendering the surface of the body water-repellent, water upon contacting with the surface of the body forms drops of water to roll down the surface of the body, whereby fouling components in the water can be prevented from adhering and remaining on the surface of the body, while the wax coating makes adhesion of fouling components to the surface of the body difficult, and even if fouling components adhere to the surface, they can be easily washed away with water.

Further, products used with water, such as bathtubs, kitchen sinks, washstands, etc. are contacted during use with various materials such as soap liquid containing oils and oily components, facial cleansing cream, hair shampoos, etc. in addition to water. At this time oily substances and calcium salts of soap (i.e. soap dregs) are considered to adhere to the surfaces of the products with dust etc. to form fouling. To prevent fouling on the product, a glazed surface constituting a glassy surface formed on the product is subjected sometimes to water repellency treatment with wax, a fluorine-containing material, etc. to prevent fouling from .. remaining on the glazed surface. By this water repellency treatment, it is also attempted to prevent adhesion of fouling to the interior and exterior of a house, toilet stools, products used with water, signboards, signs, tombstones, etc.

On the other hand, the modification of the surface of a base material by coating the surface with a surfactant to render it hydrophilic has been known for a long time, and a further improvement in durability of this hydrophilicity by adding and incorporating a water-soluble organic polymer such as polyacrylic acid or polyvinyl alcohol into the surfactant is described in JP-A 52-101680 etc. Further, a method of applying and fixing a hydrophilic material such as cellulose, glycols and glycerine via a coating of a polyvinyl alcohol-vinyl acetate copolymer to the surface and inside of a porous film made of a hydrophobic polymer is known as described in JP-B 5-67330 etc.

However, the water-repellent effect of water-repellency treatment with conventional water-repellant wax cannot be said to be satisfactory, or even if sufficient water-repellency treatment is initially conducted, the effect cannot be said to be long-lasting, thus failing to exhibit a long and sufficient anti-fouling effect. Further, the conventional hydrophilic coating confers hydrophilicity merely temporarily or in a short time, and therefore the sufficient durability of the hydrophilic effect can hardly be expected, and the water film on the hydrophilic coating is hardly rendered uniform, thus causing a transmission image or reflected image to be warped and making practical application thereof to the products problematic.

Furthermore with respect to prevention of dentures from fouling and generating smell, fluorine treatment and the like have been examined, but cannot be said to achieve a sufficient effect for a long time by treating the dentures once.

In addition, there is also demand for a coating solution capable of forming a coating excellent in characteristics such as corrosion resistance, anti-scratch properties, abrasion resistance, easy-to-clean properties, wetting properties to water, sealing properties, chemical resistance, oxidation resistance, physical barrier effect, low shrinkage, UV-barrier effect, smoothening effect, durability effect, heat resistance, fire resistance and antistatic properties, and there is strong demand for improvement particularly in corrosion resistance and anti-scratch properties.

The present invention was made to solve the problems described above. Therefore an object of the present invention is to provide a coating solution which after application, can form a rigid and dense coating excellent in adhesion to a base material and which can form a coating excellent in corrosion resistance and anti-scratch properties and simultaneously excellent in characteristics such as long-lasting hydrophilic and anti-fouling effect, abrasion resistance, easy-to-clean properties, anti-scratch properties, corrosion resistance, sealing properties, chemical resistance, oxidation resistance, physical barrier effect, low shrinkage, UV-barrier effect, smoothening effect, durability effect , heat resistance, fire resistance and antistatic properties on the surfaces of various base materials. Thereby the surfaces of various products or articles such as automobile bodies, automobile wheels, dentures, tombstones, the interior and exterior of a house, products used with water in toilets, kitchens, washrooms, bathtubs, etc., toilet stools, signboards, signs, plastic products, glass products, ceramic products, wood products, etc., can be endowed with the above-described various effects including corrosion resistance and anti-scratch properties.

The required characteristics of the coating solution, for example, the outward appearance such as uniform transparency after coating, drying characteristics, smell, safety, less damage to base materials, etc. are varied depending on base materials, setting conditions, and application modes of products or articles to be coated with the coating, solution and necessity for consideration of the surrounding environment upon application of the coating solution. Therefore, another object of the present invention is to provide a coating solution capable of easily preparing a suitable coating solution adapted to various applications.

### Disclosure of the Invention

The present invention relates to a coating solution having the following characteristics:
(1 ) A coating solution comprising a polysilazane having a Si-H bond, a diluting solvent, and a catalyst, as defined in claim 1. Preferred items are as follows:
(2) The coating solution according to the above-mentioned item 1, wherein petroleum solvent, an aromatic or alicyclic solvent, an ether, a halogenated hydrocarbon or a terpene mixture or a mixture of those solvents is used as the diluting solvent.
(3) The coating solution according to item 1, wherein a paraffin type solvent, a mineral spirit, a paraffin type solvent, terpene mixtures or an ether or a mixture thereofis used as the diluting solvent.
(4) The coating solution according to item 3, wherein dibutyl ether, dimethyl ether, diethyl ether, polyglycol ether or tetrahydrofurane or a mixture thereof is used as the diluting solvent.
(5) The coating solution according to any one of the items 2 to 4, wherein the diluting solvent further comprises one or more of solvents selected from xylene, methylcyclohexane and ethylcyclohexane.
(6) The coating solution according to any one of the items 1 to 5, wherein the concentration of the polysilazane having a Si-H bond is 0.1 to 35% by weight.
(7) The coating solution according to any one of the items 1 to 5, wherein the concentration of the polysilazane having a Si-H bond is 0.5 to 10% by weight.
(8) The coating solution according to any one of the items 1 to 7, wherein the catalyst is contained in an amount of 0.01 to 30% by weight based on a pure polysilazane content having a Si-H bond.
(9) The coating solution according to any one of the items 1 to 8, wherein the catalyst is an N-heterocyclic compound, an organic or inorganic acid, a metal carboxylate, an acetylacetona complex, fine metal particles, an peroxide, a metal chloride or an organometallic compound.
(10) The coating solution according to any one of the items 1 to 9, wherein the polysilazane having a Si-H bond is an inorganic polysilazane synthesized by reacting SiH₂Cl₂ with a base to form an adduct of SiH₂Cl₂ and then reacting the adduct of SiH₂Cl₂ with ammonia.
(11) The coating solution according to any one of the items 1 to 9, wherein the polysilazane having a Si-H bond is a polysilazane synthesized by reacting SiH₂Cl₂ and CH₃SiHCl₂ with a base to form adducts of SiH₂Cl₂ and CH₃SiHCl₂ and then reacting the adducts of SiH₂Cl₂ and CH₃SiHCl₂ with ammonia.
(12) Use of the coating solution according to any one of the items 1 to 11 for the coating of surfaces of a base material to enhance the anti-corrosion, abrasion resistance, anti-fouling properties, easy-to-clean properties, wetting properties to the water, sealing effect, chemical resistance, anti-oxidation, physical barrier effect, heat resistance, fire resistance, low shrinkage, UV-barrier effect, smoothening effect, durability effect, antistatic properties and anti-scratch characteristics of the surfaces of the base materials of products or articles.
(13) Use according to item 12, wherein the coating solution is applied to the surface of the base material in combination with a primer.
(14) Use according to claim 12 and/or 13, wherein the surface has been coated with laquers, varnishes or paints prior to the application of the coating solution.

### Preferred Mode of the Invention

Hereinafter, the present invention is described in further detail.

The coating solution of the present invention comprises a polysilazane having a Si-H bond, a diluting solvent and a catalyst as essential components as defined in claim 1. The polysilazane having a Si-H bond used in the coating solution of the present invention includes the inorganic polysilazane soluble in a solvent and having repeating units represented by the general formula:

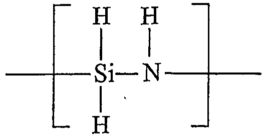

The inorganic polysilazane having repeating units represented by the above general formula and soluble in a solvent, used in the present invention, may be any inorganic polysilazanes produced by a method known in the art.

As the method of producing the inorganic polysilazane having repeating units represented by the above general formula and soluble in a solvent, any one of arbitrary methods including methods known in the art may be used as described above. One of the methods is, for example, a method of synthesizing an inorganic polysilazane by reacting a dihalosilane represented by the general formula SiH₂X₂ (X is a halogen atom) with a base to form a dihalosilane adduct and then reacting the dihalosilane adduct with ammonia. The halosilane is generally acidic and can react with a base to form an adduct. Because the rate of formation and the stability of the adduct depend on the acidity of the halosilane and the basicity or steric factor of the basic substance, the type of halosilane and the type of base may be selected suitably to form a stable adduct capable of reacting with ammonia to produce an inorganic polysilazane easily. The stability of adduct in this case does not necessarily mean such stability as to be able to be isolated in the form of adduct, but means all possible cases where, for example, the adduct exists stably in a solvent and also functions substantially as a reaction intermediate.

As the halosilane, a dihalosilane represented by the general formula SiH₂X₂ (X = F, Cl, Br, or I) is preferably selected from the viewpoint of the handling and reactivity thereof, and particularly dichlorosilane is preferably selected from the viewpoint of the reactivity, the price of its starting material, etc.

The base used for forming the adduct may be a base not causing other reactions than the reaction of forming an adduct with a halosilane, and preferable examples thereof include Lewis bases, tertiary amines (trialkylamines), pyridine, picoline and derivatives thereof, secondary amines having a sterically hindered group, phosphine, arsine and derivatives thereof (for example, trimethyl phosphine, dimethylethyl phosphine, methyldiethyl phosphine, trimethyl arsine, trimethyl stilbene, trimethylamine, triethylamine, thiophene, furan, dioxane, selenophene, etc.), among which pyridine and picoline are particularly preferable for handling and from an economical viewpoint. The amount of the base used is not particularly required to be strict, and the base may be present in excess over the stoichiometric ratio of the base (including an amine in an adduct) to the silane, that is, in excess over the ratio of amine : silane = 2 : 1. The reaction of forming an adduct is carried out in a solvent.

In synthesis of the inorganic polysilazane via an adduct, the adduct is reacted with ammonia in an inert solution to form the inorganic polysilazane, wherein the amount of ammonia may be in excess over silane, and the reaction conditions are that the reaction temperature is usually -78°C to 100°C, preferably -40°C to 80°C, and the reaction time and reaction pressure are not particularly limited. The polymerization reaction of the inorganic polysilazane is carried out preferably in an inert gas atmosphere, and the inert gas is preferably nitrogen or argon gas.

In the present invention, the inorganic polysilazane may be the one soluble in a solvent and having repeating units represented by the general formula above, but usually the one having a number-average molecular weight in the range of 600 to 3000 is preferably used. Further, the inorganic polysilazane is used preferably in an amount of 0.1 to 35% by weight based on the total weight of the coating solution, preferably in an amount of 0.5 to 10 % by weight.

Further, the organic polysilazane having a Si-H bond suitable as the polysilazane used in the present invention includes polysilazanes synthesized by reacting a dihalosilane (preferably dichlorosilane) and R¹R²SiX₂ (R¹ and R² represent a hydrogen atom or an alkyl group (preferably a methyl group) provided that R¹ and R² do not simultaneously represent a hydrogen atom; and X represents F, Cl, Br or I, preferably CI) with a base to form their corresponding adducts and then reacting the adducts with ammonia. The base and reaction conditions for forming the adducts and the conditions for the reaction of the adducts with ammonia may be identical with those for production of the inorganic polysilazane described above. The catalyst used in the present invention is 4,4'-trimethylene-dipiperidine, 4,4'-trimethylenebis(1-methylpiperidine), or 4,4'-trimethylenedipyridine.

Further, an organic acid, an inorganic acid, a metal carboxylate, an acetylacetona complex and fine metal particles can also be exemplified as a preferable catalyst. The organic acid includes acetic acid, propionic acid, butyric acid, valeric acid, maleic acid and stearic acid, and the inorganic acid includes hydrochloric acid, nitric acid, sulfuric acid, phosphoric acid, hydrogen peroxide, chloric acid and hypochlorous acid. The metal carboxylate is a compound represented by the formula: (RCOO)nM wherein R represents a C₁₋₂₂ aliphatic or alicyclic group; M represents at least one metal selected from the group consisting of Ni, Ti, Pt, Rh, Co, Fe, Ru, Os, Pd, Ir and Al; and n is the valence of M. The metal carboxylate may be an anhydride or a hydrate. The acetylacetona complex is a complex comprising a metal atom coordinated with an anion acac⁻ generated from acetylacetone(2,4-pentadione) via dissociation of an acid, and is generally represented by the formula (CH₃COCHCOCH₃)nM wherein M is a n-valent metal. Preferable examples of the metal M include nickel, platinum, palladium, aluminum and rhodium. The fine metal particles are preferably those of Au, Ag, Pd or Ni, particularly preferably Ag. The particle diameter of the fine metal particles is preferably smaller than 0.5 µm, more preferably 0.1 µm or less, still more preferably smaller than 0.05 µm. In addition to these materials, peroxides, metal chloride, and organometallic compounds such as ferrocene and zirconocene can also be used. These catalysts are incorporated in an amount of 0.01 to 30 %, preferably 0.1 to 10%, especially preferred 0.5 to 7 % based on a pure polysilazane content.

The diluting solvent used in the coating solution of the invention may be any of diluting solvents capable of dissolving the polysilazane having a Si-H bond and the catalyst. In consideration of storage stability, the diluting solvent is preferably a solvent having a sustained ability to dissolve the polysilazane and the catalyst, and the solvent even used for a long time is preferably stable without evolution of gases such as silane, hydrogen, ammonia, etc. The diluting solvent used in the coating solution of the present invention includes petroleum solvents such as mineral spirit, paraffin type solvents, aromatic solvents, alicyclic solvents, ethers and halogenated hydrocarbons. Examples of these solvents or solvent components include paraffin type solvents or solvent components such as octane and 2,2,3-trimethylpentane with 8 carbons, nonane and 2,2,5-trimethylhexane with 9 carbons, decane with 10 carbons, n-undecane with 11 carbons, etc., aromatic solvents or solvent components such as xylene with 8 carbons, cumene and mesitylene with 9 carbons, naphthalene, tetrahydronaphthalene, butylbenzene, p-cymene, diethylbenzene and tetramethylbenzene with 10 carbons, pentylbenzene with 11 carbons, etc., alicyclic solvents or solvent components such as methylcyclohexane with 7 carbons, ethylcyclohexane with 8 carbons, p-menthane, α-pinene, dipentene and decalin with 10 carbons, etc., ethers such as dimethyl ether, diethyl ether, dibutyl ether, polyglycol ether, tetrahydrofurane, etc., and halogenated hydrocarbons such as chlorinated hydrocarbons of dichloromethane, dichloroethane, chloroform, etc. or the respective fluorinated, brominated or iodated hydrocarbons and chlorinated aromatic compounds of chlorobenzene, etc. Furthermore it has been proven useful to employ terpene mixtures, like for instance Depanol^{®} as solvents. However these solvents are exemplified merely as illustrative purpose, and the solvents or solvent components are not limited to those exemplified specifically. Further, these solvents or solvent components are used alone or as a mixture thereof. Mineral sprit, paraffin type solvent and dibutyl ether are particularly preferred in these solvents.

The coating solution of the invention can be applied onto the surfaces of automobile bodies, automobile wheels, dentures, tombstones, the interior and exterior of a house, products used with water in toilets, kitchens, washrooms, bathtubs, etc., toilet stools, signboards, signs, plastic products, glass products, ceramic products, wood products, etc. or the surfaces of various articles, to form dense and hydrophilic coatings on the surfaces of these products or articles. The base materials to which the coating solution of the invention is applied include a wide variety of materials, for example metals such as iron, steel, zinc, aluminum, nickel, titanium, vanadium, chromium, cobalt, copper, zircomium, niobium, molybdenum, ruthenium, rhodium, boron, tin, lead or manganese or alloys thereof provided if necessary with an oxide or plating film, various kinds of plastics such as polymethyl methacrylate (PMMA), polyurethane, polyesters such as PET, polyallyldiglycol carbonate (PADC), polycarbonate, polyimide, polyamide, epoxy resin, ABS resin, polyvinyl chloride, polyethylene, polypropylene, polythiocyanate, POM and polytetrafluoroethylene, if necessary in combination with a primer to enhance the adhesion to the said materials. Such primers are for instance silanes, siloxanes, silazanes to name only a few. Further base materials to which the coating solution of the invention can be applied include glass, wood, ceramic, concrete, mortar, brick, clay or fibers etc. These base materials may be coated if necessary with lacquers, varnishes or paints such as polyurethane lacquers, acrylic lacquers and dispersion paints.

These methods of applying the coating solution of the invention may be any of known methods of applying liquids. Specifically, the method of applying the coating solution of the invention includes, for example, a method of wiping with a cloth, a method of wiping with a sponge, spray coating, flow coating, roller coating, dip coating, etc., but the coating method is not limited to these exemplified methods. The preferable method of applying the coating solution of the invention is varied depending on various conditions such as the shape, size and quantity of a product to which the coating solution is applied; for example, in the case of automobile bodies and tombstones, a method of wiping with a cloth, a method of wiping with a sponge and spraying are preferable in operation, and in the case of the interior and exterior of a house, roller coating and spray coating are preferable. In the case of dentures, spray coating and dip coating are preferable. Preferably, the coating solution is applied in such an amount as to form a coating of about 0.1 to 2 microns in thickness after drying.

By applying the coating solution of the invention, a dense coating can be formed on the surface of a product, and thus giving anti-corrosion, abrasion resistance, anti-fouling properties, easy-to-clean properties, wetting properties to the water, sealing effect, chemical resistance, anti-oxidation, physical barrier effect, heat resistance, fire resistance, low shrinkage, UV-barrier effect, smoothening effect, durability effect, antistatic properties and anti-scratch characteristics to the surfaces of the base materials of products or articles. The reason why the above-described characteristics can be given to the products and articles is that the polysilazane contained in the coating solution is converted into a dense silica coating by the action of the catalyst. Further, by the formation of silica coating, the surface of the products or articles shows strongly hydrophilic properties based on silica film. When dried at ordinary temperatures, the coating solution of the invention easily forms a rigid and dense coating made of silica. The formation of this silica coating is varied depending on the type of polysilazane, the type of catalyst, etc., but the coating will be formed in a period of about 1 to 2 weeks. The coating solution of the invention is in a solution form at the time of application, and can thus be applied very easily to form a coating. The coating can be converted into a dense and rigid hydrophilic coating after application, thereby giving above-described properties onto the various surface of products and articles. The surface of the formed coating is so rigid and dense that it is excellent as a corrosion-resistant coating and anti-scratch coating and simultaneously the coating is excellent in abrasion resistance, anti-fouling effect and easy-to-clean properties when fouled. Further, the coating solution of the invention can be used not only as a corrosion-resistant coating, an anti-scratch coating, an abrasion-resistant coating, an anti-fouling coating or a coating excellent in easy-to-clean properties, but also as a film-forming coating solution for forming a hydrophilic coating, a sealing material, a chemical-resistant coating, an anti-oxidization coating, a physical barrier coating, a heat resistance-conferring coating, a fire-resistant coating, an antistatic coating, a low shrinkage coating, a UV-barrier coating, a smoothening coating, a durability coating etc.

When the coating solution of the invention is used to form a hydrophilic and dense silica coating by using of the inorganic polysilazane on the surface of e.g. an automobile, a tombstone, the outer wall of a house, or the like, the resultant hydrophilic surface, upon contacting with rainwater, comes to be in the state of a watery coating without forming water drops thereon. In addition, the hydrophilic surface has higher affinity for water than for hydrophobic substances such as combustion products including dust etc., thus permitting these foul substances to be easily washed away with rain water. Further, the amount of smoke and dust adhering thereto can be reduced because of formation of the dense surface. Accordingly, visually noticeable fouling hardly occurs, and the amount of adhering fouling is reduced. And because of the dense coating formed, it is difficult to be scratched and is attained to prevent corrosion.

In the case of dentures, acrylic resin as the material of dentures absorbs water with which foul substances enter the resin or foul substances adsorb or adhere onto the resin, and these foul substances is a source of the smell of dentures. As the coating solution of the invention forms a hydrophilic and dense silica coating adhering well to dentures at a temperature at which acrylic resin as the denature material is not deformed or deteriorated, the absorption of water into the resin can be prevented, thus preventing the invasion of foul substances into the denture material, and even if foul substances adhere to the silica coating, they can be easily washed away with water, and thus evolution of smell can be prevented. Further, dentures are coated with the coating solution of the invention, so that even if unevenness occurs on denatures in finish polishing, the silica coating makes this unevenness smooth to make adhesion of foul substances more difficult. Further, the formed silica coating has high surface hardness and high durability, and is thus not abraded with foods or upon biting, is stable in the living body, and is not eluted. Even if the silica is released, it is nontoxic.

The required properties of the coating solution of the invention, for example, outward appearance, drying characteristics, smell, safety, damage to a base material, and storage stability of the coating solution, are varied a little bit depending on the use of a product to which the coating solution is applied. To cope therewith, the most suitable coating solution for intended use can be easily provided by changing not only the type and amount of the polysilazane and catalyst used but also the type of the solvent and the compounding ratio.

For example, a heavy solvent such as mineral spirit is suitable as the solvent for readily noticeably fouled base materials whose outward appearance is regarded as important, such as an automobile coated in dark color, dentures, polished granite, a mirror-finish metal or plated substrate, transparent resin and glass. Mineral terpenes Pegasol AN45 and Pegasol 3040 from Mobil Sekiyu Corp. are also preferably usable solvents. By using mineral sprit as the solvent, base materials whose spots, interference colors, whiteness and grittiness are readily noticeable can be beautifully coated with the coating solution. Mineral spirit has the above-described advantage, but is relatively poor in the solubilizing power so that for compensating for the solubilizing power, mixed aromatic solvents such as Solvesso 100 and Solvesso 150 from Esso Sekiyu Co. and Pegasol R-100 and Pegasol R-150 from Mobil Sekiyu Corp. may be compounded in addition to mineral sprit. Further, paraffin type solvents free of aromatic components can also be used as the solvent. Specifically, low-odor solvents Exxol DSP100/140, Exxol D30, Exxol D40 etc. from Tonen Chemical Co. can be mentioned.

Further, it is also important that products used with water, such as those in toilets, kitchens, washrooms, bathrooms, etc. and dentures are odorless. By adding a low-odor solvent such as methylcyclohexane or ethylcyclohexane if necessary as a part of the solvent, a coating solution with less smell can be provided for such products required to be odorless.

The coating solution of the invention may be applied to a product and goods newly produced or to a product during use.

Then, examples of compositions of the inorganic polysilazane, the catalyst and the diluting solvent in the coating solution intended for the respective uses are shown below. These are shown merely for illustrative purposes, and the composition and compounding ratio of the coating solution may be adapted to the use of a product coated therewith, and the composition and compounding ratio of the coating solution of the invention are not limited to those shown below.

### A. Automobile bodies, wheels

The solution should not damage a coating sublayer and be stable such that particularly when the solution is applied by a cup gun, it is not whitened in the cup gun.

### (Example of Compounding Ratio)

| | |
|---|---|
| Inorganic polysilazane: | 0.3 to 2% by weight |
| DMPP: | 0.01 to 0.1 % by weight |
| Xylene: | 0.5 to 10% by weight |
| Pegasol AN45: | balance |

DMPP is 4,4'-trimethylenebis(1-methylpiperidine) (hereinafter this abbreviation is used).

### (Preferable Example of Compounding Ratio)

| | |
|---|---|
| Inorganic polysilazane: | 0.4 to 1 % by weight |
| DMPP: | 0.01 to 0.05% by weight |
| Xylene: | 1 to 4% by weight |
| Pegasol AN45: | balance |

### B. Dentures

The solution should be stable without whitening for a long time and safe to the human body with less smell without deforming or deteriorating acrylic resin as the denture material.

### (Example of Compounding Ratio)

| | |
|---|---|
| Inorganic polysilazane: | 0.5 to 5% by weight |
| DMPP: | 0.02 to 0.2% by weight |
| Pegasol AN45: | balance |

### (Preferable Example of Compounding Ratio)

| | |
|---|---|
| Inorganic polysilazane: | 1 to 2% by weight |
| DMPP: | 0.04 to 0.08% by weight |
| Pegasol AN45: | balance |

### C. Tombstones

The solution should show less interference color when applied on granite or the like and be stable for a long time so as not to be whitened.

### (Example of Compounding Ratio)

| | |
|---|---|
| Inorganic polysilazane: | 0.5 to 4% by weight |
| DMPP: | 0.01 to 0.2% by weight |
| Xylene: | 5 to 50% by weight |
| Pegasol 3040: | balance |

### (Preferable Example of Compounding Ratio)

| | |
|---|---|
| Inorganic polysilazane: | 1 to 3% by weight |
| DMPP: | 0.01 to 0.1 % by weight |
| Xylene: | 5 to 15% by weight |
| Pegasol 3040: | balance |

### D. The interior and exterior of a house, bathtubs, kitchens, etc.

The solution should scarcely smell, be safe to the human body, and have a high drying characteristic.

### (Example of Compounding Ratio)

| | |
|---|---|
| Inorganic polysilazane: | 0.3 to 2% by weight |
| DMPP: | 0.01 to 0.2% by weight |
| Xylene: | 1 to 10% by weight |
| Pegasol AN45: | 5 to 88% by weight |
| Ethylcyclohexane: | 5 to 88% by weight |
| Methylcyclohexane: | 5 to 88% by weight |

### (Preferable Example of Compounding Ratio)

| | |
|---|---|
| Inorganic polysilazane: | 0.5 to 2% by weight |
| DMPP: | 0.01 to 0.1 % by weight |
| Xylene: | 1 to 5% by weight |
| Pegasol AN45: | 20 to 50% by weight |
| Ethylcyclohexane: | 20 to 50% by weight |
| Methylcyclohexane: | 20 to 50% by weight |

### E. Polycarbonate plate

The solution should not erode a polycarbonate plate as a substrate.

### (Example of Compounding Ratio)

| | |
|---|---|
| Inorganic polysilazane: | 0.5 to 5% by weight |
| DMPP: | 0.01 to 0.4% by weight |
| Xylene: | 1 to 10% by weight |
| Pegasol 3040: | balance |

### (Preferable Example of Compounding Ratio)

| | |
|---|---|
| Inorganic polysilazane: | 0.5 to 4% by weight |
| DMPP: | 0.03 to 0.2% by weight |
| Xylene: | 3 to 10% by weight |
| Pegasol 3040: | balance |

The solvents Pegasol AN45 and Pegasol 3040 (Mobil Sekiyu Corp.), which are fractions produced by hydrogenation and refining of distillated oil obtained by distillation of crude oil at normal pressures, are mainly C₈ to C₁₁ petroleum type hydrocarbons, and their aniline points are 43°C and 54°C respectively, and Pegasol AN45 contains aromatic components in a higher amount than in Pegasol 3040.

### Best Mode for Carrying Out the Invention

Hereinafter, the present invention is described in more detail by reference to the Production Examples and the Examples, but the present invention is not limited to the Production Examples and the Examples described below.

### Production Example 1 (Production of the inorganic polysilazane)

A gas inlet tube, a mechanical stirrer and a Dewar condenser were fit into a four-necked flask with an internal volume of 300 ml. The inside of the reactor was replaced by dry deoxygenated nitrogen, and then 150 ml of dry degassed pyridine was introduced into the four-necked flask and cooled on ice. Then, 16.1 g dichlorosilane was added thereto over 50 minutes, to form a white solid adduct (SiH₂CI₂-2Py). The reaction mixture was cooled on ice under vigorous stirring and bubbled over 1 hour with a mixture of a nitrogen gas and 10.9 g ammonia previously purified by passage through a soda lime tube and an active carbon tube. After the reaction was finished, the solid product was removed by centrifugation and subsequent filtration. By removing the solvent from the filtrate under reduced pressure (50°C, 5 mmHg, 2 hours), 5.52 g glassy solid polysilazane was obtained. The molecular weight of the polysilazane determined by a vapor pressure depression method was 2000. The yield was 77%.

### Production Example 2 (Production of the organic polysilazane)

A gas inlet tube, a mechanical stirrer and a Dewar condenser were fit into a four-necked flask with an internal volume of 300 ml. The inside of this reactor was replaced by dry deoxygenated nitrogen, and then 150 ml of dry degassed pyridine was introduced into the four-necked flask and cooled on ice. Then, 9.2 g methyl dichlorosilane and 8.1 g dichlorosilane were added thereto to form a white solid adduct. The reaction mixture was cooled on ice under vigorous stirring and bubbled with a mixture of a nitrogen gas and 12.0 g ammonia previously purified by passage through a soda lime tube and an active carbon tube. After the reaction was finished, the solid product was removed by centrifugation and subsequent filtration. By removing the solvent from the filtrate under reduced pressure (50°C, 5 mmHg, 2 hours), 5.2 g viscous liquid polysilazane was obtained. The molecular weight determined by a vapor pressure depression method was 1,600. The yield was 72%.

### Example 1

0.5 part by weight of the inorganic polysilazane obtained in Production Example 1 and 0.02 part by weight of DMPP (catalyst) were dissolved in a solvent consisting of 1.98 parts by weight of xylene and 97.5 parts by weight of Pegasol AN45 (Mobil Sekiyu Corp.), to give an anti-fouling coating solution for automobile bodies and wheels.

The coating solution was coated by spraying with a spray gun onto a coated steel plate in such an amount as to give a coating of 0.2 µm in thickness after conversion into silica. After drying, the coating was examined in an outdoor exposure test, and the change in contact angle was observed, to give the results in Table 1.

**Table 1**

| Number of outdoor exposure days (days) . | 0 | 7 | 14 | 21 | 28 | 3 months | 6 months | 1 year |
|---|---|---|---|---|---|---|---|---|
| Contact angle (degrees) | 65 | 41 | 23 | 16 | 11 | 10 | 9 | 10 |

As can be seen from Table 1, formation of a silica coating gradually proceeded, and 2 weeks later, a hydrophilic coating had been almost formed, and by this hydrophilic silica coating, the coated steel plate remained in a stably coated state for a long time. The coated steel plate, observed after 6 months and 1 year respectively, was not recognized to be fouled.

This coating solution was sealed in a nitrogen atmosphere, stored at ordinary temperatures, and examined for generation of monosilane after 1 month, 3 months and 6 months respectively, and as a result, the amount of monosilane generated was 43 ppm after 1 month, 61 ppm after 3 months and 75 ppm after 6 months, indicating good storage stability.

When the coating solution in Example 1 was placed in the cup of a spray gun and left for 30 minutes at ordinary temperatures in the air, the solution maintained its transparent state. Separately, a coating solution was prepared from the same composition described above except that Pegasol AN45 was replaced by Pegasol 3040 (Mobil Sekiyu Corp.) having a lower aromatic content than in Pegasol AN45, and this coating solution turned turbid after 20 minutes. From this result, it was found that when an automobile anti-fouling coating solution having the composition described above is applied by a spray gun, a solvent containing aromatic components in a higher amount within a range not influencing a coating sublayer is preferably used in the coating solution from the viewpoint of stability of the coating solution.

### Example 2

One part by weight of the inorganic polysilazane obtained in Production Example 1 and 0.04 part by weight of DMPP (catalyst) were dissolved in a solvent consisting of 98.96 parts by weight of Pegasol AN45 (Mobil Sekiyu Corp.), to give an anti-fouling coating solution for dentures.

This coating solution was applied by a spray gun onto the whole of dentures to form a silica coating of 0.3 µm in thickness thereon. The coating was converted completely into silica by drying it at 45°C for 60 minutes in an oven and subsequent treatment for 12 hours under the conditions of 40°C and 90% relative humidity in a high-temperature high-humidity apparatus. A hydrophilic and dense silica coating was formed on the surface of the dentures, and when the dentures were used, the coating was not deteriorated, and fouling could be easily washed away with water, and no smell was generated.

### Example 3

One part by weight of the inorganic polysilazane obtained in Production Example 1 and 0.04 part by weight of DMPP (catalyst) were dissolved in a solvent consisting of 11.46 parts by weight of xylene and 87.5 parts by weight of Pegasol 3040 (Mobil Sekiyu Corp.), to give an anti-fouling coating solution for tombstones.

This coating solution was applied by aerosol spraying onto polished granite. A uniform coating of 0.4 µm in thickness was thereby formed. After 2 weeks, a hydrophilic and dense silica coating was formed on the surface, and when left outdoors for 1 year, the coating was not deteriorated, and no fouling was observed.

### Example 4

0.5 part by weight of the inorganic polysilazane obtained in Production Example 1 and 0.02 part by weight of DMPP (catalyst) were dissolved in a solvent consisting of 1.98 parts by weight of xylene, 32.5 parts by weight of Pegasol AN45 (Mobil Sekiyu Corp.), 32.5 parts by weight of ethylcyclohexane and 32.5 parts by weight of methylcyclohexane, to give an anti-fouling coating solution for coating of products used with water, such as bathtubs, washstands etc. This coating solution was applied onto the surfaces of a washstand made of ceramic ware and an enameled bathtub. A 0.2 µm uniform coating was formed respectively. Fouling hardly adhered, and if adhered, the fouling could be easily removed.

### Example 5

One part by weight of the inorganic polysilazane obtained in Production Example 1 and 0.04 part by weight of DMPP (catalyst) were dissolved in a solvent consisting of 3.96 parts by weight of xylene, 31.7 parts by weight of Pegasol AN45 (Mobil Sekiyu Corp.), 31.7 parts by weight of ethylcyclohexane and 31.7 parts by weight of methylcyclohexane, to give an anti-fouling coating solution for the interior and exterior of a house. This coating solution was applied by rolling onto the surface of the outer wall of a house. The outer wall was not fouled for a long time. Fouling such as dust could be easily removed by spraying with water.

### Example 6

Two parts by weight of the inorganic polysilazane obtained in Production Example 1 and 0.08 part by weight of DMPP (catalyst) were dissolved in a solvent consisting of 7.92 parts by weight of xylene and 90 parts by weight of Pegasol 3040 (Mobil Sekiyu Corp.), to give an anti-fouling coating solution for polycarbonate plates. Using a cloth impregnated with this coating solution, the coating solution was applied by hand onto a polycarbonate plate. A hydrophilic and dense silica coating could be formed on the surface without erosion of the substrate by the coating solution.

### Example 7 (Reference)

5 parts by weight of the inorganic polysilazane obtained in Production Example 1 and 0.035 part by weight of Pd propionate (catalyst) were dissolved in a solvent consisting of 25 parts by weight of xylene and 69.97 parts by weight of Solvesso 150 (Esso Sekiyu Co.), to give a coating solution. An aluminum plate was coated by flow coating with this coating solution in an amount to give a coating of 0.3 µm in thickness after conversion into silica. After drying, the aluminum plate was calcinated at 120°C for 1 hour in the air to give a sample for a corrosion resistance test. Separately, a PET film was coated by flow coating with the coating solution in an amount to give a coating of 0.3 µm in thickness after conversion into silica. After drying, the aluminum plate and the PET film were treated at 90°C, 90% RH for 3 hours, to give a sample for a scratch test. The characteristics of the coating were evaluated in the following manner, to give the results of corrosion resistance in Table 2 and anti-scratch properties in Table 3.

### Evaluation of Characteristics of the Coating

### (1) Corrosion resistance

A coating was formed on an aluminum plate and then examined for the degree of corrosion of the base material for 96 hours in a CASS test wherein the test specimen was sprayed with a solution prepared by adding acetic acid and copper (II) chloride to an aqueous solution of sodium chloride.
⊚ : Significantly superior in corrosion resistance.
○ : Superior in corrosion resistance.
Δ : Slightly inferior in corrosion resistance.
x : Inferior in corrosion resistance.

### CASS test method

The test specimen is sprayed with a mixture of 4% brine and 0.027% cupric chloride (dihydrate) in a test bath set at 50°C, and its corrosiveness and corrosion resistance are evaluated.

The term CASS is an abbreviation of "copper-accelerated acetic acid salt spray".

### (2) Anti-scratch properties

A coating was formed on a polyethylene terephthalate film (PET film) and then tested with steel wool No. #000 under a loading of 500 g (area: 2 cm²) reciprocated 300 times, and its haze was measured with a haze meter.

### Example 8 (Reference)

0.2 parts by weight of the inorganic polysilazane obtained in Production Example 1 and 0.002 part by weight of Pd propionate (catalyst) were dissolved in a solvent consisting of 1 parts by weight of xylene and 98.80 parts by weight of Solvesso 150 (Esso Sekiyu Co.), to give a coating solution. An aluminum plate was coated by flow coating with this coating solution in an amount to give a coating of 0.03 µm in thickness after conversion into silica. After drying, the aluminum plate was calcinated at 120°C for 1 hour in the air to give a sample for a corrosion resistance test. Separately, a PET film was coated by flow coating with the coating solution in an amount to give a coating of 0.03 µm in thickness after conversion into silica. After drying, the PET film was treated at 90°C, 90% RH for 3 hours, to give a sample for a scratch test. The coatings were evaluated in the same manner as Example 7, to give the results of corrosion resistance in Table 2 and anti-scratch properties in Table 3.

### Example 9 (Reference)

20 parts by weight of the inorganic polysilazane obtained in Production Example 1 and 0.14 part by weight of Pd propionate (catalyst) were dissolved in a solvent consisting of 25 parts by weight of xylene and 54.86 parts by weight of Solvesso 150 (Esso Sekiyu Co.), to give a coating solution. An aluminum plate was coated by flow coating with this coating solution in an amount to give a coating of 1.2 µm in thickness after conversion into silica. After drying, the aluminum plate was calcinated at 120°C for 1 hour in the air to give a sample for a corrosion resistance test. Separately, a PET film was coated by flow coating with the coating solution in an amount to give a coating of 1.2 µm in thickness after conversion into silica. After drying, the PET film was treated at 90°C, 90% RH for 3 hours, to give a sample for a scratch test. The coatings were evaluated in the same manner as Example 7, to give the results of corrosion resistance in Table 2 and anti-scratch properties in Table 3.

### Example 10 (Reference)

5 parts by weight of the organic polysilazane obtained in Production Example 2 and 0.035 part by weight of Pd propionate (catalyst) were dissolved in a solvent consisting of 94.97 parts by weight of dibutyl ether, to give a coating solution. An aluminum plate was coated by flow coating with this coating solution in an amount to give a coating of 0.3 µm in thickness after conversion into silica. After drying, the aluminum plate was calcinated at 120°C for 1 hour in the air to give a sample for a corrosion resistance test. Separately, a PET film was coated by flow coating with the coating solution in an amount to give a coating of 0.3 µm in thickness after conversion into silica. After drying, the PET film was treated at 90°C, 90% RH for 3 hours, to give a sample for a scratch test. The coatings were evaluated in the same manner as Example 7, to give the results of corrosion resistance in Table 2 and anti-scratch properties in Table 3.

### Example 11 (Reference)

20 parts by weight of the organic polysilazane obtained in Production Example 2 and 0.14 parts by weight of Pd propionate (catalyst) were dissolved in a solvent consisting of 79.86 parts by weight of dibutyl ether, to give a coating solution. An aluminum plate was coated by flow coating with this coating solution in an amount to give a coating of 1.2 µm in thickness after conversion into silica. After drying, the aluminum plate was calcinated at 120°C for 1 hour in the air to give a sample for a corrosion resistance test. Separately, a PET film was coated by flow coating with the coating solution in an amount to give a coating of 1.2 µm in thickness after conversion into silica. After drying, the PET film was treated at 90°C, 90% RH for 3 hours, to give a sample for a scratch test. The coatings were evaluated in the same manner as Example 7, to give the results of corrosion resistance in Table 2 and anti-scratch properties in Table 3.

### Example 12

5 parts by weight of the inorganic polysilazane obtained in Production Example 1 and 0. 2 parts by weight of DMPP (catalyst) were dissolved in a solvent consisting ' of 25 parts by weight of xylene and 69.8 parts by weight of Pegasol AN45 (Mobil Sekiyu Corp.), to give a coating solution. An aluminum plate was coated by flow coating with this coating solution in an amount to give a coating of 0.3 µm in thickness after conversion into silica. After drying, the aluminum plate was calcinated at 120°C for 1 hour in the air to give a sample for a corrosion resistance test. Separately, a PET film was coated by flow coating with the coating solution in an amount to give a coating 0.3 µm in thickness after conversion into silica. After drying, the PET film was treated at 90°C, 90% RH for 3 hours, to give a sample for a scratch test. The coatings were evaluated in the same manner as Example 7, to give the results of corrosion resistance in Table 2 and anti-scratch properties in Table 3.

### Example 13

15 parts by weight of the inorganic polysilazane obtained in Production Example 1 and 0.6 parts by weight of DMPP (catalyst) were dissolved in a solvent consisting of 25 parts by weight of xylene and 59.4 parts by weight of Pegasol AN45 (Mobil Sekiyu Corp.), to give a coating solution. An aluminum plate was coated by flow coating with this coating solution in an amount to give a coating of 1,0 µm in thickness after conversion into silica. After drying, the aluminum plate was calcinated at 120°C for 1 hour in the air to give a sample for a corrosion resistance test. Separately, a PET film was coated by flow coating with the coating solution in an amount to give a coating of 1.0 µm in thickness after conversion into silica. After drying, the PET film was treated at 90°C, 90% RH for 3 hours, to give a sample for a scratch test. The characteristics of the coatings were evaluated in the same manner as Example 7, to give the results of corrosion resistance in Table 2 and anti-scratch properties in Table 3.

**Table 2: Results of the corrosion resistance test**

| Example | 7 | 8 | 9 | 10 | 11 | 12 | 13 | Aluminum plate |
|---|---|---|---|---|---|---|---|---|
| Evaluation results | ○ | Δ | ⊚ | ○ | ⊚ | ○ | ⊚ | × |

**Table 3: Results of the scratch test**

| Example | 7 | 8 | 9 | 10 | 11 | 12 | 13 | PET |
|---|---|---|---|---|---|---|---|---|
| Haze (%) | 2 | 5 | 1 | 3 | 1 | 2 | 1 | 20 |

### Effect of the Invention

As described above, the coating solution of the present invention is in a liquid form at the time of application, and thus the coating solution can be easily applied by spray coating, a method of wiping with a cloth or sponge or the like onto the base material. After application, the polysilazane in a liquid form can be converted into a rigid and dense coating, thus easily forming a coating film excellent in anti-corrosion and anti-scratch properties. In addition, the hydrophilicity of the coating film thus formed is durable and its effective hydrophilicity can be maintained usually for 1 to 2 years. Besides the hydrophilicity, the coating can give such characteristics as abrasion resistance, anti-fouling properties, wetting properties to the water, anti-scratch properties, anti-corrosion properties, sealing effect, chemical resistance, anti-oxidation properties, physical barrier effect, heat resistance, fire resistance and antistatic properties to the products or the articles. Further, the coating solution can be applied in very wide uses by merely regulating the type of solvent, the amounts of compounding materials.

## Claims

1. A coating solution comprising a polysilazane having a Si-H bond, a diluting solvent, and a catalyst, wherein the catalyst is 4,4'-trimethylene-dipiperidine, 4,4'-trimethylenebis(1-methylpiperidine) or 4,4' - trimethylenedipyridine.

2. The coating solution according to Claim 1, wherein petroleum solvent, an aromatic or alicyclic solvent, an ether, a halogenated hydrocarbon or a terpene mixture or a mixture of those solvents is used as the diluting solvent.

3. The coating solution according to Claim 2, wherein a paraffin type solvent, a mineral spirit, terpene mixtures or an ether or a mixture thereof is used as the diluting solvent.

4. The coating solution according to Claim 3, wherein dibutyl ether, dimethyl ether, diethyl ether, polyglycol ether or tetrahydrofurane or a mixture thereof is used as the diluting solvent.

5. The coating solution according to any one of Claims 2 to 4, wherein the diluting solvent further comprises one or more of solvents selected from xylene, methylcyclohexane and ethylcyclohexane.

6. The coating solution according to any one of Claims 1 to 5, wherein the concentration of the polysilazane having a Si-H bond is 0.1 to 35% by weight

7. The coating solution according to any one of Claims 1 to 5, wherein the concentration of the polysilazane having a Si-H bond is 0.5 to 10% by weight.

8. The coating solution according to any one of Claims 1 to 7, wherein the catalyst is contained in an amount of 0.01 to 80% by weight based on a pure polysilazane content having a Si-H bond.

9. The coating solution according to any one of Claims 1 to 8, wherein the polysilazane having a Si-H bond is an inorganic polysilazane synthesized by reacting SiH₂Cl₂ with a base to form an adduct of SiH₂Cl₂ and then reacting the adduct of SiH₂Cl₂ with ammonia.

10. The coating solution according to any one of Claims 1 to 8, wherein the polysilazane having a Si-H bond is a polysilazane synthesized by reacting SiH₂Cl₂ and CH₃SiHCl₂ with a base to form adducts of SiH₂Cl₂ and CH₃SiHCl₂ and then reacting the adducts of SiH₂Cl₂ and CH₃SiHCl₂ with ammonia.

11. Use of the coating solution according to any one of the Claims 1 to 10 for the coating of surfaces of a base material to enhance the anti-corrosion, abrasion resistance, anti-fouling properties, easy-to-clean properties, wetting properties to the water, sealing effect, chemical resistance, anti-oxidation, physical barrier effect, heat resistance, fire resistance, low shrinkage, UV-barrier effect, smoothening effect, durability effect, antistatic properties and anti-scratch characteristics of the surfaces of the base materials of products or articles.

12. Use according to claim 11, wherein the coating solution is applied to the surface of the base material in combination with a primer.

13. Use according to claim 11 and/or 12, wherein the surface has been coated with laquers, vamishes or paints prior to the application of the coating solution.

## Patentansprüche

1. Beschichtungslösung, enthaltend ein Polysilazan mit einer Si-H-Bindung, einem verdünnenden Lösungsmittel und einem Katalysator, wobei der Katalysator 4,4'-Trimethylendipiperidin, 4,4'-Trimethylenbis(1-methylpiperidin) oder 4,4'-Trimethylendipyridin ist.

2. Beschichtungslösung gemäß Anspruch 1, wobei ein Petroleumlösungsmittel, ein aromatisches oder alicyclisches Lösungsmittel, ein Ether, ein halogenierter Kohlenwasserstoff oder eine Terpenmischung oder eine Mischung dieser Lösungsmittel als verdünnendes Lösungsmittel eingesetzt wird.

3. Beschichtungslösung gemäß Anspruch 2, wobei ein paraffinartiges Lösungsmittel, ein Lackbenzin, Terpenmischungen oder ein Ether oder eine Mischung daraus als verdünnendes Lösungsmittel eingesetzt wird.

4. Beschichtungslösung gemäß Anspruch 3, wobei Dibutylether, Dimethylether, Diethylether, Polyglykolether oder Tetrahydrofuran oder eine Mischung daraus als verdünnendes Lösungsmittel eingesetzt wird.

5. Beschichtungslösung gemäß einem der Ansprüche 2 bis 4, wobei das verdünnende Lösungsmittel zusätzlich ein oder mehrere Lösungsmittel ausgewählt aus Xylol, Methylcyclohexan und Ethylcyclohexan enthält.

6. Beschichtungslösung gemäß einem der Ansprüche 1 bis 5, wobei die Konzentration des Polysilazans mit einer Si-H-Bindung 0,1 bis 35 Gew.-% beträgt.

7. Beschichtungslösung gemäß einem der Ansprüche 1 bis 5, wobei die Konzentration des Polysilazans mit einer Si-H-Bindung 0,5 bis 10 Gew.-% beträgt.

8. Beschichtungslösung gemäß einem der Ansprüche 1 bis 7, wobei der Katalysator in einer Menge von 0,01 bis 30 Gew.-% enthalten ist, bezogen auf einen Gehalt an reinem Polysilazan mit einer Si-H-Bindung.

9. Beschichtungslösung gemäß einem der Ansprüche 1 bis 8, wobei das Polysilazan mit einer Si-H-Bindung ein anorganisches Polysilazan ist, synthetisiert durch Umsetzen von SiH₂Cl₂ mit einer Base zur Bildung eines SiH₂Cl₂-Addukts und dann Umsetzen des SiH₂Cl₂-Addukts mit Ammoniak.

10. Beschichtungslösung gemäß einem der Ansprüche 1 bis 8, wobei das Polysilazan mit einer Si-H-Bindung ein Polysilazan ist, synthetisiert durch Umsetzen von SiH₂Cl₂ und CH₃SiHCl₂ mit einer Base zur Bildung von Addukten von SiH₂Cl₂ und CH₃SiHCl₂ und dann Umsetzen der Addukte von SiH₂Cl₂ und CH₃SiHCl₂ mit Ammoniak.

11. Verwendung der Beschichtungslösung gemäß einem der Ansprüche 1 bis 10 zur Beschichtung von Oberflächen eines Basismaterials zur Verbesserung des Korrosionsschutzes, der Abriebfestigkeit, der Antischmutzeigenschaften, der Easy-to-Clean-Eigenschaften, der Benetzungseigenschaften gegenüber Wasser, der Abdichtungswirkung, der chemischen Beständigkeit, des Oxidationsschutzes, der physikalischen Barrierewirkung, der Hitzebeständigkeit, der Feuerbeständigkeit, der Schrumpfverringerung, der UV-Barrierewirkung, der glättenden Wirkung, der Haltbarkeit, der antistatischen Eigenschaften und der Kratzfestigkeitseigenschaften der Oberflächen des Basismaterials von Produkten oder Artikeln.

12. Verwendung gemäß Anspruch 11, wobei die Beschichtungslösung auf der Oberfläche des Basismaterials in Kombination mit einem Primer angewendet wird.

13. Verwendung gemäß Anspruch 11 und/oder 12, wobei die Oberfläche mit Laquers, Lacken oder Farben vor der Anwendung der Beschichtungslösung beschichtet wurde.

## Revendications

1. Solution de revêtement comprenant un polysilazane ayant une liaison Si-H, un solvant de dilution et un catalyseur, dans laquelle le catalyseur est la 4,4'-triméthylènedipipéridine, la 4,4'-triméthylènebis(1-méthylpipéridine) ou la 4,4'-triméthylènedipyridine.

2. Solution de revêtement selon la revendication 1, dans laquelle un solvant de pétrole, un solvant aromatique ou alicyclique, un éther, un hydrocarbure halogéné ou un mélange de terpènes ou un mélange de ces solvants est utilisé comme solvant de dilution.

3. Solution de revêtement selon la revendication 2, dans laquelle un solvant de type paraffine, une essence minérale, un mélange de terpènes ou un éther ou un mélange de ceux-ci est utilisé comme solvant de dilution.

4. Solution de revêtement selon la revendication 3, dans laquelle de l'éther de dibutyle, de l'éther de diméthyle, de l'éther de diéthyle, de l'éther de polyglycol ou du tétrahydrofurane ou un mélange de ceux-ci est utilisé comme solvant de dilution.

5. Solution de revêtement selon l'une quelconque des revendications 2 à 4, dans laquelle le solvant de dilution comprend en outre un ou plusieurs solvants choisis parmi le xylène, le méthylcyclohexane et l'éthylcyclohexane.

6. Solution de revêtement selon l'une quelconque des revendications 1 à 5, dans laquelle la concentration du polysilazane ayant une liaison Si-H est de 0,1 à 35 % en poids.

7. Solution de revêtement selon l'une quelconque des revendications 1 à 5, dans laquelle la concentration du polysilazane ayant une liaison Si-H est de 0,5 à 10 % en poids.

8. Solution de revêtement selon l'une quelconque des revendications 1 à 7, dans laquelle le catalyseur est contenu en une quantité de 0,01 à 30 % en poids sur la base d'une teneur en polysilazane ayant une liaison Si-H pur.

9. Solution de revêtement selon l'une quelconque des revendications 1 à 8, dans laquelle le polysilazane ayant une liaison Si-H est un polysilazane inorganique synthétisé par la réaction de SiH₂Cl₂ avec une base pour former un produit d'addition de SiH₂Cl₂ et ensuite la réaction du produit d'addition de SiH₂Cl₂ avec de l'ammoniac.

10. Solution de revêtement selon l'une quelconque des revendications 1 à 8, dans laquelle le polysilazane ayant une liaison Si-H est un polysilazane synthétisé par la réaction de SiH₂Cl₂ et de CH₃SiHCl₂ avec une base pour former des produits d'addition de SiH₂Cl₂ et de CH₃SiHCl₂ et ensuite la réaction des produits d'addition de SiH₂Cl₂ et de CH₃SiHCl₂ avec de l'ammoniac.

11. Utilisation de la solution de revêtement selon l'une quelconque des revendications 1 à 10 pour le revêtement de surfaces d'un matériau de base pour accroître la résistance à la corrosion, la résistance à l'abrasion, les propriétés antisalissure, les propriétés de facilité de nettoyage, les propriétés de mouillage à l'eau, l'effet de colmatage, la résistance chimique, la résistance à l'oxydation, l'effet de barrière physique, la résistance à la chaleur, la résistance au feu, un faible retrait, l'effet de barrière aux UV, l'effet de lissage, l'effet de durabilité, les propriétés antistatiques et les caractéristiques anti-rayure des surfaces des matériaux de base de produits ou articles.

12. Utilisation selon la revendication 11, dans laquelle la solution de revêtement est appliquée sur la surface du matériau de base en association avec un apprêt.

13. Utilisation selon la revendication 11 et/ou 12, dans laquelle la surface a été revêtue de laques, de vernis ou de peintures avant l'application de la solution de revêtement.
